# EUROPÄISCHE PATENTSCHRIFT

(11) **EP 4 236 265 B1**
(45) Veröffentlichungstag und Bekanntmachung des Hinweises auf die Patenterteilung: **17.09.2025**
(21) Anmeldenummer: 22198219.2
(22) Anmeldetag: 27.09.2022
(51) Int. Cl.: H04L 67/12, H04L 12/12, H04L 12/66, H04L 12/64, H04L 69/325

(54) **HARDWAREBASIERTES UND EFFIZIENTES WEITERLEITEN VON DATEN**
HARDWARE-BASED AND EFFICIENT FORWARDING OF DATA
TRANSFERT DE DONNÉES EFFICACE ET BASÉ SUR LE MATÉRIEL

(43) Veröffentlichungstag der Anmeldung: 30.08.2023
(73) Patentinhaber: INOVA Semiconductors GmbH, 81671 München (DE)
(72) Erfinder: Neumann, Roland, 83646 Bad Toelz (DE); Kluge, Fabian, 94366 Perasdorf (DE)
(74) Vertreter: Reich, Jochen

(56) Entgegenhaltungen:
- US-A1- 2004 117 499
- US-A1- 2013 101 058

## Beschreibung

Die vorliegende Erfindung ist auf eine Sendevorrichtung zum effizienten Weiterleiten von Daten in einem Automobil gerichtet, welche es ermöglicht, dass auf einem einzigen physischen Kanal beispielsweise 128 virtuelle Datenpfade effizient Daten übertragen können. Die vorgeschlagene Erfindung schafft Vorrichtungen, welche unidirektional ausgebildet sind und damit mit geringem technischem Aufwand aufgrund der reduzierten Komplexität bereitgestellt werden können. Die vorliegende Erfindung stellt besonders auf die Anforderungen in einem Automobil ab, wobei eine Gewichtseinsparung und hohe Fehlertoleranz notwendig sind. Die Gewichtseinsparung wird durch die Vereinfachung von herkömmlichen Einheiten erreicht, wozu lediglich ein einziger physischer Pfad notwendig ist, die Vorrichtungen jedoch 128 virtuelle Datenpfade behandeln können. Die Fehlerrobustheit wird erfindungsgemäß dadurch erreicht, dass die strukturellen Komponenten unidirektional ausgebildet sind und somit können diese besonders einfach und ohne fehleranfällige strukturelle Merkmale geschaffen werden. Die Erfindung ist ferner auf eine Eingangsvorrichtung in Senderichtung gerichtet, welche teilweise der Ausgangsvorrichtung in Empfangsrichtung funktional invers ausgebildet ist, sowie einer Paketdaten-Verarbeitungsvorrichtung in Senderichtung und in Empfangsrichtung, sowie auf eine Systemanordnung umfassend die vorgeschlagenen Sendevorrichtung und die vorgeschlagenen Empfangsvorrichtung. Darüber hinaus wird ein Verfahren vorgeschlagen sowie ein Computerprogrammprodukt aufweisend Verfahrensschritte, welche in einer Produktionsanlage zum Bereitstellen der Systemanordnung bzw. der Eingangsvorrichtung und der Ausgangsvorrichtung geeignet ist. Ferner wird ein computerlesbares Medium vorgeschlagen aufweisend die Steuerbefehle.

US 2013/0101058 A1 zeigt eine Mulitprotokoll-Schnittstelle mit einer Mehrzahl an Komponenten und bidirektionale Datenpfade.

Aus dem Stand der Technik sind unterschiedliche Lösungen bekannt, welche softwaretechnisch eine Datenkommunikation realisieren. Hierzu sind aus dem Stand der Technik unterschiedliche Lösungen bekannt, welche Komponenten aufweisen, die entweder softwaretechnisch oder hardwaretechnisch umgesetzt werden.

Insbesondere aus einer softwaretechnischen Implementierung kann sich ein erhöhter Aufwand ergeben und die Komplexität der zugrunde liegenden Schaltungen ist hoch. Solche Anwendungen stellen auf Anwendungsszenarien ab, die flexibel sein müssen und beispielsweise ein dynamisches Paketvermitteln implementieren sollen.

Verfahren aus dem Stand der Technik sind typischerweise nicht zur Verwendung in einem Automobil geeignet, da oftmals proprietäre Standards verwendet werden, die für leistungsstarke Computernetzwerke konzipiert sind, jedoch nicht den Anforderungen in einem Automobil entsprechen. In einem Automobil werden ganz andere Anforderungen an eine Echtzeitdatenübertragung sowie an die Fehlerrobustheit gestellt. Verfahren, welche sich auf ein Übermitteln von Videodaten beziehen sind typischerweise für einen Endverbraucher konzipiert, der über eine leistungsstarke Computeranlage verfügt. In solchen Anwendungsszenarien sind typischerweise große Hardwarekapazitäten vorhanden und auch der Energieverbrauch spielt lediglich eine untergeordnete Rolle. Im Automobil hingegen ist es notwendig Gewicht einzusparen, eine hohe Zuverlässigkeit zu bieten sowie Energie einzusparen. Bei der Elektromobilität bedeutet ein höherer Energieverbrauch unmittelbar eine niedrigere Reichweite des Automobils. Insofern besteht im Stand der Technik ein Bedarf Vorrichtungen zu schaffen, welche Daten mit geringem technischem Aufwand und in vielerlei Hinsicht mit hoher Effizienz schaffen.

Alle diese beispielhaft aufgeführten Techniken sind für die Übertragung eines Datentyps (Video, Audio, SPI, Ethernet) optimiert. Ein "Bridging" von einer Schnittstelle (z.B. Displayport) zu einer anderen Schnittstelle mit gleichem Datentyp (z.B.) HDMI ist nicht möglich.

Dabei werden die elektronischen Systeme in Fahrzeugen seit Jahrzehnten immer komplexer, immer leistungsfähiger und immer "datenintensiver".

Hierbei spielt die effektive und schnell Vernetzung von Anzeigeeinheiten, Aktuatoren, Sensoren und Verarbeitungseinheiten eine zentrale Rolle, wenn nicht sogar die systemleistungsbestimmende Rolle.

Anzeigeeinheiten, Sensorik und Aktuatoren und die dazugehörigen Verarbeitungseinheiten sind in einem Fahrzeug relativ weit voneinander entfernt. Werden nun für jede Schnittstelle individuelle Kommunikationslösungen zwischen Sensor/Aktuator und Verarbeitungseinheit (GPU/CPU) wie in einem PC oder Handy (Stand der Technik oben) realisiert bedeutet dies einen immensen Verkabelungsaufwand (Gewicht) mit meist eingeschränkter Performance auf Grund der räumlichen Entfernung.

Um nun Gewicht bei Kabeln und Steckern zu sparen, besteht die Notwendigkeit Datenverbindungen auf ein und demselben Kabelsystem zu bündeln. Für ein und dieselbe Art von Daten sind dies die klassischen SERDES Lösungen (Stand der Technik). Systeme um Daten seriell, mit Gigabit Datenraten zu übertragen.

Das Bündeln von unterschiedlichen Datenpfaden verlangt universelle, nicht Datentyp (Video, Audio, etc.) spezifische Lösungen. Die Vielzahl von Daten Schnittstellen, existierende wie immer wieder neu entstehende müssen auf normierte, universelle Schnittstellen abgebildet werden, um einen möglichst großen re-use der komplexen Datenpfad Logik zu ermöglichen.

Somit besteht ein Bedarf Vorrichtungen, Systemanordnungen und Verfahren zu schaffen, welche die oben geschilderten Nachteile nicht verwirklichen und besonders in einem Automobil in vorteilhafter Weise eingesetzt werden können.

Demgemäß ist es eine Aufgabe der vorliegenden Erfindung eine Sendevorrichtung vorzuschlagen, welche besonders effizient umgesetzt werden kann und zudem gerade mit Bezug auf den Einsatz im Automobil Hardwareressourcen einspart. Weiterhin ist es eine Aufgabe eine zur Sendevorrichtung teilweise funktional invers ausgestaltete Empfangsvorrichtung vorzuschlagen, sowie eine Systemanordnung, welche alle Vorrichtungen miteinander kombiniert. Darüber hinaus ist es eine Aufgabe der vorliegenden Erfindung ein Verfahren zum Bereitstellen der Vorrichtungen vorzuschlagen sowie ein Computerprogrammprodukt mit computerlesbarem Speichermedium.

Die Aufgabe wird gelöst mit den Merkmalen des Patentanspruchs 1. Weitere vorteilhafte Ausgestaltungen sind in den Unteransprüchen angegeben.

Demgemäß wird eine Eingangsvorrichtung in Senderichtung zum effizienten Übertragen von Daten in einem Automobil vorgeschlagen, aufweisend eine Eingangsschnittstelleneinrichtung aufweisend eine Vielzahl von Eingangsschnittstelleneinheiten, mit einer ersten Gruppe von Eingangsschnittstelleneinheiten, welche jeweils hardwaretechnisch zum Empfangen von kontinuierlichen Daten eingerichtet sind und einer zweiten Gruppe von Eingangsschnittstelleneinheiten, welche jeweils hardwaretechnisch zum Empfangen von diskontinuierlichen Daten eingerichtet sind; eine Paketierungseinrichtung eingerichtet zum Segmentieren der Daten und zum Anreichern der Daten mit einer Weiterleitungsinformation und einer Datenabsicherungsinformation; einer Paketierungseinrichtung Paketdaten-Verarbeitungsvorrichtung zum Weiterleiten der Daten und eine Ausgangseinrichtung in Senderichtung eingerichtet zum Bereitstellen der Daten an einen physischen Übertragungskanal, wobei die Eingangsschnittstelleneinrichtung, die Paketierungseinrichtung und die Ausgangseinrichtung unidirektional kommunikativ gekoppelt sind.

Die vorgeschlagene Eingangsvorrichtung in Senderichtung ist bezüglich des Weiterleitens von Daten besonders effizient, da bereits der Aufbau der Eingangsvorrichtung derart konzipiert ist, dass lediglich eine unidirektionale Weiterleitung von Daten erfolgt und die Vorrichtung eben nicht bidirektional ausgestaltet es, wie es der Stand der Technik vorsieht. Durch diese Einfachheit in der Eingangsvorrichtung ist es möglich, die Vorrichtung besonders effizient bereitzustellen und es sind lediglich zwei Typen von Eingangsschnittstellen notwendig. Diese Eingangsschnittstellen weisen unterschiedliche Typen auf und sind entweder für den Empfang von kontinuierlichen Daten oder diskontinuierlichen Daten optimiert. Ferner ist es möglich, die Paketierungseinrichtung, welche auch als Paketdaten-Verarbeitungsvorrichtung oder als Paketdaten-Verarbeitungseinrichtung bezeichnet werden kann, derart anzusteuern, dass lediglich ein physischer Datenkanal notwendig ist. Werden mehrere Datenpfade verwendet, so ist es erfindungsgemäß möglich bis zu 128 virtuelle Datenpfade auf diesem einen physischen Datenkanal einzurichten. Hieraus ergibt sich eine besonders hohe Fehlertoleranz sowie eine Gewichtseinsparung, da eben nicht viele physische Pfade vorgehalten werden müssen, sondern eben lediglich ein einziger physischer Datenkanal.

Das Weiterleiten der Daten erfolgt derart, dass die Daten an der Eingangsschnittstelleneinrichtung entgegengenommen werden und durch die Eingangsvorrichtung in Senderichtung hindurchgeleitet werden, in der Paketdaten-Verarbeitungsvorrichtung mit Paketdaten anderer Eingangsschnittstelleneinrichtungen gemultiplext werden und bei der Ausgangseinrichtung in Senderichtung ausgegeben werden. Multiplexing bedeutet, mehrere Signale oder Informationsströme auf einer Leitung gleichzeitig in Form eines einzigen, komplexen Signals zu übertragen und dann auf der Empfangsseite wieder in separate Signale zu zerlegen. Gemäß der vorliegenden Erfindung werden also Paketdaten mehrere Eingangsschnittstelleneinrichtungen kombiniert.

Bei dem Durchleiten der Daten können auch weitere Verarbeitungsschritte durchgeführt werden. Insbesondere ist es möglich, die Daten in der Paketdaten-Verarbeitungsvorrichtung zu entnehmen bzw. zu verarbeiten. An die Eingangsvorrichtung kann zum Beispiel eine Paketdaten-Verarbeitungsvorrichtung gekoppelt sein, welche ein entsprechendes Signal ausgibt.

Die Eingangsschnittstelleneinrichtung weist eine Vielzahl von Eingangsschnittstelleneinheiten auf. Dies führt dazu, dass die Eingangsschnittstelleneinrichtung über mehrere physische Datenkanäle die Daten für die unterschiedlichen virtuellen Kanäle empfangen kann, wobei jeder virtuelle Kanal einer Eingangsschnittstelleneinheit zugewiesen ist. Generell ist die Eingangsschnittstelleneinrichtung bzw. die Eingangsschnittstelleneinheit derart implementiert, dass diese zum Empfangen von kontinuierlichen Daten oder aber zum Empfangen von diskontinuierlichen Daten eingerichtet sind. Der technische Unterschied zwischen diesen Schnittstellen bezieht sich beispielsweise auf die Größe der vorgehaltenen Pufferspeicher bzw. der flüchtigen Speicher. Generell gibt es also zwei Gruppen von Eingangsschnittstelleneinheiten, wobei eine Gruppe zum Empfangen von kontinuierlichen Daten vorgesehen ist und die zweite zum Empfangen von diskontinuierlichen Daten. Generell werden alle Daten über die Eingangsschnittstelleneinrichtung entgegengenommen. Bei einem kontinuierlichen Datenstrom kann es sich zum Beispiel um Videodaten handeln und bei diskontinuierlichen Daten kann es sich um Steuerbefehle handeln. Die beiden Gruppen von Eingangsschnittstelleneinheiten können gemäß einem Aspekt der vorliegenden Erfindung auch derart unterschieden werden, dass die erste Gruppe eine schnellere Verarbeitungseinheit vorhält als die zweite Gruppe. Dies ermöglicht es, dass kontinuierliche Daten mit größerem Speicher und/ oder schnellerer Prozessorleistung abgearbeitet werden als dies der Fall bei der Behandlung von diskontinuierlichen Daten ist.

Darüber hinaus ist eine Paketierungseinrichtung (Segmentation Unit) vorgesehen, welche zum Erzeugen von Datenpaketen eingerichtet ist, wobei datenpaketspezifische Informationen vorgesehen sind. Hierbei kann es sich um Informationen bezüglich der Adressierung bzw. des Routings handeln oder aber auch zum Schutz der datenpaketspezifischen Informationen. Ein Schutz der datenpaketspezifischen Informationen kann zum Beispiel durch eine Prüfsumme bewerkstelligt werden. Hier erfolgt gemäß einem Aspekt der vorliegenden Erfindung auch die Steuerung der Datenpaketierung. Dies heißt also, dass eine Formatierung der Applikationsdaten auf Paketdaten (Daten Zellen) erfolgt und/ oder eine Anpassung der Bitbreite.

Die gemäß einem Aspekt der vorliegenden Erfindung nachfolgende Paketdaten verarbeitende Einheit (Crossbar Unit) ergänzt die datenpaketspezifischen Informationen um Weiterleitungsinformation, welche angibt, an welches Ziel die Daten weitergeleitet werden sollen. Hierbei kann es sich um ein statisches Routing handeln, was wiederum besonders effizient zu implementieren ist. Ein dynamisches Routing würde zu viel technischen Aufwand bedeuten und die Eingangsvorrichtung ließe sich nicht effizient implementieren.

Darüber hinaus ist gemäß einem Aspekt der vorliegenden Erfindung eine Ausgangseinrichtung (Line Coding & Framer Unit) vorgesehen, die zum Bereitstellen der Daten an einen physischen Übertragungskanal eingerichtet ist. Die Ausgangseinrichtung nimmt die Daten von der Paketdaten verarbeitenden Einheit (Crossbar Unit) entgegen und ist hardwaretechnisch eingerichtet die Daten sodann auszugeben. Die Ausgabe kann beispielsweise an die vorgeschlagene Ausgangsvorrichtung in Senderichtung übermittelt werden. Hierzu erhält die Ausgangsvorrichtung in Senderichtung eine Eingangseinrichtung bereit. Die Ausgangseinrichtung ist derart implementiert, dass diese die verpackten Daten aus der Paketdaten verarbeitende Einheit (Crossbar Unit) verarbeitet, ausgibt und/ oder an den physischen Übertragungskanal bereitstellt. Bei dem physischen Übertragungskanal kann es sich um ein Kabel handeln und die Ausgangseinrichtung stellt hierzu ebenfalls eine Schnittstelle bereit.

Die Eingangsschnittstelleneinrichtung (Burst Data Interface, Stream Data Interface), die Paketierungseinrichtung (Segmentation Unit), die Paketdaten verarbeitende Einheit (Crossbar Unit) und die Ausgangseinrichtung (Line Coding & Framer Unit) sind derart verschaltet, dass diese unidirektionale Daten weiterleiten, das heißt also dass die Eingangsdaten der Eingangsschnittstelleneinrichtung an die Paketierungseinrichtung und die Paketdaten verarbeitende Einheit weitergegeben werden und sodann mittels der Ausgangseinrichtung ausgegeben werden können. Ein Datenfluss in umgekehrter Reihenfolge ist nicht vorgesehen. Hierdurch ist es möglich die vorgeschlagene Eingangsvorrichtung besonders effizient zu implementieren.

Die Erfindung schafft unter anderem die folgenden Vorteile:
- Modulare Erweiterbarkeit um Applikationsschnittstellen ohne die Datenpfadlogik zu verändern (Kompliance und Kompatibilität zu bestehenden Systemen bleibt gewährleistet);
- Verwendung von beliebigen Phys mit unterschiedlicher Bandbreite ohne die Datenpfadlogik zu verändern (Kompliance und Kompatibilität zu bestehenden Systemen bleibt gewährleistet);
- Hardware- Lösung zur Anpassung an beliebige Applikationsschnittstellen reduziert Softwareaufwand und gewährleistet hohen, effizienten Datendurchsatz.

Gemäß einem Aspekt vorliegenden Erfindung beträgt eine Anzahl der Schnittstelleneinheiten zwischen 2 und 128 und/ oder es liegen bis zu 128 virtuelle Datenpfade zu den Eingangsschnittstelleneinheiten vor. Dies hat den Vorteil, dass die Hardwareanforderungen minimiert werden können, sodass lediglich eine einzige physische Schnittstelle bereitzuhalten ist und dennoch 128 virtuelle Datenpfade eingerichtet werden können. Auch kann die Anzahl der Schnittstelleneinheiten variieren, wobei mindestens eine Eingangsschnittstelleneinheit der ersten Gruppe und eine Eingangsschnittstelleneinheit der zweiten Gruppe vorliegen müssen. Somit ist sichergestellt, dass sowohl kontinuierliche Daten als auch diskontinuierlichen Daten optimal verarbeitet werden können.

Gemäß einem weiteren Aspekt der vorliegenden Erfindung sind die Eingangsschnittstelleneinrichtung, die Paketierungseinrichtung, die Paketdaten verarbeitende Einheit und/ oder die Ausgangseinrichtung hardwaretechnisch umgesetzt. Dies hat den Vorteil, dass keine komplexe Schaltung implementiert werden muss, welche Softwarebefehle abspeichert und ausführt. Vielmehr können die Einrichtungen hartkodiert vorliegen und können somit auch effizient betrieben werden. Die Einrichtungen lassen sich mit geringem technischem Aufwand bereitstellen, da keine dynamischen Vorgänge verarbeitet werden müssen. Somit können alle Einheiten fest verdrahtet bereitgestellt werden. Dies erhöht zudem die Ausfallsicherheit und reduziert den Energiebedarf.

Gemäß einem weiteren Aspekt der vorliegenden Erfindung übermitteln alle Einheiten und Einrichtungen lediglich Daten in eine Richtung. Dies hat den Vorteil, dass die strukturellen Merkmale besonders effizient ausgestattet werden können. Durch die unidirektionale Datenübertragung wird zudem sichergestellt, dass keine Schutzmechanismen vorzusehen sind, da ein Datenfluss eben nur in eine Richtung möglich ist. Fehlerhafte Daten können also nicht in die entgegengesetzte Richtung übertragen werden, was wiederum einen einfachen Schutzmechanismus implementiert.

Gemäß einem weiteren Aspekt der vorliegenden Erfindung liegen kontinuierliche Daten als Streamingdaten vor und diskontinuierlichen Daten liegen als Burstdaten vor. Dies hat den Vorteil, dass hardwaretechnisch auf das entsprechende Übertragungskonzept eingegangen werden kann und somit kann eine optimierte Hardware bereitgestellt werden. Die Hardware kann somit auf die speziellen Anforderungen von Streamingdaten bzw. Burstdaten eingehen. Gerade bei Streamingdaten besteht eine hohe Anforderung an die Echtzeitübertragung, dabei Videodaten sonst ein Verzug erkennbar wäre. Zudem können Mechanismen implementiert werden, die darauf abstellen, dass Streaming Daten kontinuierlich übertragen werden und Burstdaten Pausen in der Datenübertragung zu lassen. Dementsprechend können dann die Pufferspeicher eingerichtet werden.

Gemäß einem weiteren Aspekt der vorliegenden Erfindung können kontinuierliche Daten einen Rahmen aufweisen der die kontinuierlichen Daten segmentiert (z.B.: Hsync,Vsync,DE bei Video) und diskontinuierlichen Daten weisen typischerweise keine Rahmeninformation auf, da diese ja auf Grund der burstartigen Datenstruktur implizit Anfang und Ende haben. Es wird wiederum eine besonders effiziente Schaltung realisiert, die bei kontinuierlichen Daten eine in Hardware implementierte Logik vorhält, die die Rahmeninformation an die Datenpakete heftet. Derselbe Mechanismus kann optional bei diskontinuierlichen Daten zum Signalisieren des Burst Anfangs /Endes verwendet werden.

Gemäß am weiteren Aspekt vorliegender Erfindung weisen die Schnittstelleneinheiten für kontinuierliche Daten einen größeren Pufferspeicher auf als Schnittstelleneinheiten für diskontinuierliche Daten. Dies hat den Vorteil, dass die Speicher nicht überdimensioniert werden müssen und gerade die Schnittstellen für diskontinuierliche Daten können entsprechend effizient ausgestaltet werden. Dies verringert wiederum den technischen Aufwand der Bereitstellung.

Gemäß einem weiteren Aspekt der vorliegenden Erfindung passt die Paketierungseinrichtung die Daten in ihrem Format an. Dies hat den Vorteil, dass weitere Informationen bereitgestellt werden können, wie zum Beispiel eine Adresse und/ oder eine Prüfsumme zur Absicherung der Datenübertragung.

Gemäß einem weiteren Aspekt der vorliegenden Erfindung weisen die Eingangsschnittstelleneinrichtung, die Paketierungseinrichtung und die Ausgangseinrichtung flüchtige Speicher auf. Dies hat den Vorteil, dass effiziente Speicher geschaffen werden können, die keine Daten persistent speichern müssen. Flüchtige Speicher sind besonders einfach herzustellen und weisen ebenfalls eine hohe Arbeitsgeschwindigkeit auf.

Gemäß einem weiteren Aspekt der vorliegenden Erfindung ist die Anzahl der Schnittstelleneinheiten der ersten Gruppe und der zweiten Gruppe gleich. Dies hat den Vorteil, dass ein symmetrisches Verarbeiten möglich ist und somit können spezialisierte Schnittstelleneinheiten geschaffen werden.

Gemäß einem weiteren Aspekt kann die Anzahl der Schnittstelleneinheiten der ersten Gruppe und der zweiten Gruppe jedoch auch variieren. Dies ermöglicht es sodann auf das entsprechende Anwendungsszenario Rücksicht zu nehmen.

Die Aufgabe wird auch gelöst durch eine Ausgangsvorrichtung in Empfangsrichtung zum effizienten Weiterleiten von Daten in einem Automobil, aufweisend eine Ausgangsschnittstelleneinrichtung aufweisend eine Vielzahl von Ausgangsschnittstelleneinheiten, mit einer ersten Gruppe von Ausgangsschnittstelleneinheiten, welche jeweils hardwaretechnisch zum Senden von kontinuierlichen Daten eingerichtet sind und einer zweiten Gruppe von Ausgangsschnittstelleneinheiten, welche jeweils hardwaretechnisch zum Senden von diskontinuierlichen Daten eingerichtet sind; eine Entpaketierungseinrichtung (Reassembly Unit) eingerichtet zum Zurückgewinnen der Applikationsdaten aus den Paketdaten, der Weiterleitungsinformation und der Datenabsicherungsinformation; eine Paketdaten verarbeitende Einheit (Crossbar Unit) und einer Eingangseinrichtung in Empfangsrichtung eingerichtet zum Empfangen der Daten auf einem physischen Übertragungskanal, wobei die Ausgangsschnittstelleneinrichtung in Empfangsrichtung, die Entpaketierungseinrichtung, die Paketdaten verarbeitende Einheit und die Eingangseinrichtung in Empfangsrichtung unidirektional kommunikativ gekoppelt sind.

Die Ausgangsvorrichtung in Empfangsrichtung ist der Eingangsvorrichtung in Senderichtung gemäß einem Aspekt der vorliegenden Erfindung analog mit inverser Funktionalität ausgestaltet. Dies heißt also, dass die Ausgangsvorrichtung in Empfangsrichtung eine inverse Funktionalität bereitstellt und die Ausgabe der Eingangsvorrichtung in Senderichtung zur Eingabe der Ausgangsvorrichtung in Empfangsrichtung wird. Die verpackten Daten der Eingangsvorrichtung in Senderichtung werden also in der Ausgangsvorrichtung in Empfangsrichtung entpackt und in inverser Richtung ausgegeben. Insofern betreffen alle Aspekte der Eingangsvorrichtung in Senderichtung auch die Aspekte der Ausgangsvorrichtung in Empfangsrichtung. Die Datenverarbeitung bzw. Datenweiterleitung erfolgt in der Ausgangsvorrichtung invers zu der Richtung der Eingangsvorrichtung.

Die Aufgabe wird auch gelöst durch eine Systemanordnung aufweisend die Sendevorrichtung und die Empfangsvorrichtung, welche mittels einer seriellen Datenverbindung kommunikativ gekoppelt sind. Die Systemanordnung kann einstückig ausgeformt werden oder aber die Sendevorrichtung und die Empfangsvorrichtung können getrennt implementiert werden.

Gemäß einem weiteren Aspekt der vorliegenden Erfindung ist zwischen allen Vorrichtungen, Einrichtungen und Einheiten ein statisches Routing und/ oder eine Festverdrahtung vorgesehen. Dies hat den Vorteil, dass die strukturellen Merkmale effizient ausgestaltet werden können und ein besseres Laufzeitverhalten erreicht wird.

Gemäß einem weiteren Aspekt der vorliegenden Erfindung ist die Systemanordnung einstückig ausgeformt. Dies hat den Vorteil, dass eine kompakte und zerstörungsrobuste Bauweise geschaffen wird. Einstückig heißt hierbei, dass die Komponenten nicht zerstörungsfrei separiert werden können. Hierdurch ist es möglich die Komponenten der Eingangsvorrichtung und der Ausgangsvorrichtung, insbesondere die Eingangsschnittstelleneinrichtung und die Ausgangsschnittstelleneinrichtung, effizient und mit geringem technischem Aufwand kommunikativ zu verbinden beziehungsweise zu verdrahten.

Gemäß einem weiteren Aspekt der vorliegenden Erfindung weisen die Eingangsschnittstelleneinrichtung und die Ausgangsschnittstelleneinrichtung zueinander eine direkte festverdrahtete kommunikative Kopplung auf. Dies hat den Vorteil, dass eine Rückkopplungsschleife gebildet wird ohne die Unidirektionalität aufzubrechen. Dies ermöglicht es ohne großen technischen Aufwand einen Funktionstest durchzuführen.

Gemäß einem weiteren Aspekt der vorliegenden Erfindung ist ein Funktionalitätstest derart durchführbar, dass mittels einer direkten Datenkommunikation zwischen der Eingangsschnittstelleneinrichtung und der Ausgangsschnittstelleneinrichtung gleiche Daten ein und sodann ausgegeben werden. Dies hat den Vorteil, dass die Einrichtungen bezüglich ihrer Funktionalität auf einfache Weise überprüft werden können. Gibt man einen Datenstrom an der Eingangsschnittstelleneinrichtung ein, so kann dieser über die direkte Kopplung unmittelbar, das heißt ohne weitere Einrichtungen zu durchlaufen, an der Ausgangsschnittstelleneinrichtung ausgegeben werden. Somit ist es möglich zu überprüfen, ob die Daten korrekt durchgeleitet wurden. Alternativ werden nicht die gleichen Daten als Ausgabe erwartet, sondern die bearbeiteten Eingabedaten, um zu überprüfen, ob bis zu dieser Komponente die Verarbeitung spezifikationsgemäß durchgeführt wurde. Somit ergibt sich ein einfacher Funktionstest, der in der Datenkommunikation mittels der kurzen Rückkopplungsschleife die weiteren in Serie gekoppelten Komponenten gemäß der längeren Datenkommunikation ausschließt.

Die Aufgabe wird auch gelöst durch ein Verfahren zum Bereitstellen einer Eingangsvorrichtung zum effizienten Weiterleiten von Daten auf virtuellen Datenpfaden, aufweisend ein Bereitstellen einer Eingangsschnittstelleneinrichtung aufweisend eine Vielzahl von Eingangsschnittstelleneinheiten, mit einer ersten Gruppe von Eingangsschnittstelleneinheiten, welche jeweils hardwaretechnisch zum Empfangen von kontinuierlichen Daten eingerichtet sind und einer zweiten Gruppe von Eingangsschnittstelleneinheiten, welche jeweils hardwaretechnisch zum Empfangen von diskontinuierlichen Daten eingerichtet sind; ein Bereitstellen einer Paketierungseinrichtung und Paketdaten verarbeitenden Einheit eingerichtet zum Anreichern der Daten mit einer Weiterleitungsinformation und einer Datenabsicherungsinformation; und ein Bereitstellen einer Ausgangseinrichtung eingerichtet zum Bereitstellen der Daten an einen physischen Übertragungskanal, wobei die Eingangsschnittstelleneinrichtung, die Paketierungseinrichtung, die Paketdaten verarbeitende Einheit und die Ausgangseinrichtung unidirektional kommunikativ gekoppelt sind.

Ein Aspekt der vorliegenden Erfindung ist es, mehrere Datenströme (Video, Audio und Daten) in einem Transportframe zu bündeln und seriell zu übertragen. Die unterschiedlichen Datenformate haben nicht nur unterschiedliche Bandbreitenanforderungen, sondern auch unterschiedliche Latenz-, - und Bitfehlerratenanforderungen. Insbesondere die Übertragung heutiger Videodatenformate erfordert nicht nur die Übertragung der reinen Videodaten und deren Frame-Informationen, sondern auch die Unterstützung von Verschlüsselungsverfahren wie HDCP. All dies erfordert viele unterschiedliche Datenkanäle mit unterschiedlichsten Anforderungen an Bandbreite, Latenz, und Bitfehlerrate bzw Bitfehlererkennung. Hinzu kommt der Wunsch nach weitaus komplexeren Netzwerkarchitekturen als eine einfache Sender-Empfänger-Architektur bietet. Architekturen mit mehreren Repeatern, wo Datenpfade beginnen und enden können, Verzweigungen (Y) auch mit der Möglichkeit, Datenpfade wieder in einen Link zu integrieren, sind vorteilhaft.

Die Technologie folgt gemäß einem Aspekt der vorliegenden Erfindung dem Grundgedanken die Daten der unterschiedlichen Dienste zu bündeln, bietet aber völlig neue Möglichkeiten hinsichtlich Netzwerkarchitekturen und erlaubt neue Ansätze bei der Implementierung heutiger Videoschnittstellen. Darüber hinaus kann sie als universelles Datentransportsystem verwendet werden, beispielsweise auch zur Übertragung von Ethernet- oder Kameradaten oder jeglicher Art von Sensordaten.

Bei einem virtuellen Pfad bei dieser Erfindung nehmen alle Datenpakete bzw. Zellen denselben Pfad, im Gegensatz zu IP, wo ein Paket sein Ziel über verschiedene Pfade erreichen könnte als vorherige und nachfolgende Pakete. Latenz über einen virtuellen Pfad ist somit konstant.

Virtuelle Pfade basierend auf Datenpaketen bzw. Zellen haben außerdem den Vorteil, dass sie als Multiplexing -Layer für unterschiedliche Dienste (Video, Audio, Ethernet) verwendet werden können
Virtuelle Pfade verbrauchen nur dann Bandbreite, wenn tatsächlich Daten übertragen werden.

Das hier implementierte Konzept der virtuellen Pfade ermöglicht es auch, komplexe und weitreichende Diagnose- und Netzwerkkonfigurationsfunktionen zur Laufzeit mit eigenen (virtuellen) Datenkanälen zu realisieren.

Gemäß einem Aspekt der vorliegenden Erfindung wird eine Eingangsvorrichtung in Senderichtung, eine Paketdaten-Verarbeitungsvorrichtung in Senderichtung, eine Ausgangsvorrichtung in Senderichtung, eine Eingangsvorrichtung in Empfangsrichtung, eine Paketdaten-Verarbeitungsvorrichtung in Empfangsrichtung, eine Ausgangsvorrichtung in Empfangsrichtung zwischen der physikalischen, seriellen Schnittstelle und den verschiedenen Anwendungsdatenschnittstellen implementiert.

Diese werden gemäß einem Aspekt der vorliegenden Erfindung verwendet, um die verschiedenen virtuellen Datenpfade zu Multiplexen und komplexere Architekturen mit Repeatern und Verzweigungen zu unterstützen. Dies geschieht hauptsächlich in der Paketdaten-Verarbeitungsvorrichtung.

Ein weiterer Aspekt der vorliegenden Erfindung ist eine Eingangsvorrichtung in Senderichtung und eine Ausgangsvorrichtung in Empfangsrichtung, die die Konvertierung von Video (Stream) oder z.B. Ethernet-(Paket-)Daten in die Zellen (Datenpakete) vornimmt. Diese Eingangsvorrichtung in Senderichtung und die Ausgangsvorrichtung in Empfangsrichtung umfasst auch die OAM-Funktionen für die Netzwerkdiagnose und -verwaltung.

Die Technologie kann gemäß einem Aspekt der vorliegenden Erfindung die Grundlage für die Übertragung einer Vielzahl von Datenformaten über eine serielle Verbindung im Auto (und anderswo) sein. Es bildet damit die Basis für eine neue Gerätegeneration.

Die hohen seriellen Bandbreiten machen es erforderlich, Architekturen, Zellformate und Schnittstellen zu definieren, die flexible interne Datenbusbreiten ermöglichen, um die Geschwindigkeit des internen Taktsystems an die Möglichkeiten der Chiptechnologie anzupassen.

Die vorliegende Erfindung besteht aus Eingangsvorrichtung in Senderichtung und Ausgangsvorrichtung in Empfangsrichtung, die die Konvertierung von Video (Stream) oder z.B. Ethernet-(Paket-)Daten in die oder aus den Zellen (Datenpakete) vornimmt. Weiter besteht die vorliegende Erfindung aus einer Paketdaten Verarbeitungsvorrichtung in Sende- und Empfangs-Richtung, die die Datenpakete (Zellen) verarbeitet, ergänzt, mit anderen Zellen multiplext oder de-multiplext und damit den Fluß der Zellen steuert. Weiter besteht die vorliegende Erfindung aus einer Ausgangsvorrichtung in Senderichtung und einer Eingangsvorrichtung in Empfangsrichtung, die die Datenpakete (Zellen) für die serielle Übertragung vorteilhaft kodiert oder de-kodiert, in einen Übertragungsrahmen verpackt oder aus diesem entpackt und diesen Übertragungsrahmen serialisiert oder de-serialisiert.. Die serielle Verbindung ist grundsätzlich bidirektional zu verstehen. Theoretisch lässt sich diese Verbindung über verschiedenste Medien realisieren. Praktisch werden zwei serielle differenzielle GBps-Verbindungen verwendet.

In den Paketdaten-Verarbeitungsvorrichtungen werden die segmentierten Daten (Zell-Nutzdaten) der Applikationsschnittstellen mit Header, VP-Kennung und CRC zu vollständigen Zellen zusammengesetzt oder Zellen werden CRC-geprüft und die Nutzlast wird an die Ausgangsvorrichtung in Empfangsrichtung weitergegeben. Hier erfolgt auch das Multiplexen der unterschiedlichen Zellströme der Eingangsvorrichtung in Senderichtung bzw. die Verteilung der Zellnutzlasten auf die Ausgangsvorrichtung in Empfangsrichtung gemäß dem VP Identifier. (Einspeisen / Ausspeisen)

In den Paketdaten-Verarbeitungsvorrichtungen erfolgt gemäß einem Aspekt der vorliegenden Erfindung auch das Multiplexing und Demultiplexing von Zellströmen in Repeatern und Splittern (Forwarding).

Die Aufgabe der Eingangsvorrichtung in Senderichtung besteht gemäß einem Aspekt der vorliegenden Erfindung darin, die Daten der Anwendungsschnittstellen an das Format des Nutzdatenfeldes der Zelle anzupassen und Steuerinformationen an die Gegenseite zu übermitteln bzw. Steuerinformationen der Gegenseite für die zu verwenden Anpassung (Taktrückgewinnung, Rahmenbildung).

Gemäß einem Aspekt der vorliegenden Erfindung sind alle virtuellen Datenpfade unidirektional, d.h. sie beginnen bei einem Initiator am Applikationsinterface und enden bei einem oder mehreren Zielen am Applikationsinterface.

Der virtuelle Datenpfad beginnt bei einem Initiator und endet bei einem oder mehreren Zielen. Die Realisierung erfolgt durch die Paketdaten-Verarbeitungsvorrichtungen und führt die folgenden Funktionen auf dem virtuellen Pfad aus:
- Multiplexing & De-Multiplexing von Zellen hinzufügen oder entnehmen von Zellen aus dem Zellstrom
- VP-Übersetzung

Das Verfahren kann derart eingesetzt werden, dass Maschinen angesteuert werden, die die Eingangsvorrichtungen bereitstellen, die Ausgangsvorrichtungen bereitstellen, die Paketdaten-Verarbeitungsvorrichtung und/ oder die Systemanordnung bereitstellen.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Ablaufdiagramm eines Verfahrens zum Bereitstellen einer Eingangsvorrichtung gemäß einem Aspekt der vorliegenden Erfindung;
- Figur 2:: ein schematisches Blockdiagramm einer Sendevorrichtung zum effizienten Weiterleiten von Daten, gemäß einem weiteren Aspekt der vorliegenden Erfindung oder ein schematisches Blockdiagramm einer Empfangsvorrichtung zum effizienten Weiterleiten von Daten, gemäß einem weiteren Aspekt der vorliegenden Erfindung; und
- Figur 3:: eine Systemanordnung aufweisend die vorgeschlagene Sendevorrichtung und die vorgeschlagene Empfangsvorrichtung gemäß am weiteren Aspekt vorliegenden Erfindung.

Die vorliegenden Figuren weisen teilweise Parameter auf, welche dem Fachmann in der englischen Bezeichnung so geläufig sind und welche als Parameter verwendet werden und so nicht zu übersetzen sind.

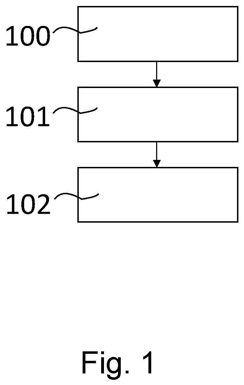

Figur 1 zeigt in einem schematischen Ablaufdiagramm ein Verfahren zum Bereitstellen einer Eingangsvorrichtung zum effizienten Weiterleiten von Daten auf virtuellen Datenpfaden, aufweisend ein Bereitstellen 100 einer Eingangsschnittstelleneinrichtung aufweisend eine Vielzahl von Eingangsschnittstelleneinheiten, mit einer ersten Gruppe von Eingangsschnittstelleneinheiten, welche jeweils hardwaretechnisch zum Empfangen von kontinuierlichen Daten eingerichtet sind und einer zweiten Gruppe von Eingangsschnittstelleneinheiten, welche jeweils hardwaretechnisch zum Empfangen von diskontinuierlichen Daten eingerichtet sind; ein Bereitstellen 101 einer Paketierungseinrichtung eingerichtet zum Anreichern der Daten mit einer Weiterleitungsinformation und einer Datenabsicherungsinformation; und ein Bereitstellen 102 einer Ausgangseinrichtung eingerichtet zum Bereitstellen der Daten an einen physischen Übertragungskanal, wobei die Eingangsschnittstelleneinrichtung, die Paketierungseinrichtung und die Ausgangseinrichtung unidirektional kommunikativ gekoppelt sind.

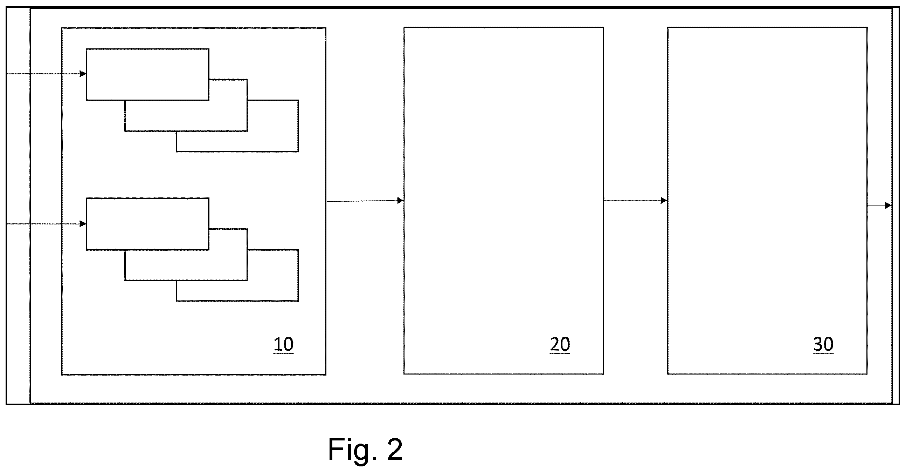

Figur 2 zeigt ein schematisches Blockdiagramm einer Sendevorrichtung zum effizienten Weiterleiten von Daten. Vorliegend auf der unteren Seite ist die Eingangsschnittstelleneinrichtung 10 angezeigt, welche unterschiedliche Eingangsschnittstelleneinheiten aufweist, beispielsweise die Eingangsschnittstelleneinheiten der ersten Gruppe, links, und der zweiten Gruppe, rechts. Unten sind 6 Eingangspfeile stellvertretend für bis zu 128 Eingangspfeile eingezeichnet, welche virtuelle Pfade beschreiben. Tatsächlich werden die Eingänge auf der unteren Seite über einen physischen Kanal implementiert. Gleiches gilt für den Ausgangspfeil auf der oberen Seite, der ebenfalls als ein physischer Kanal implementiert werden kann. Die höchstens 128 virtuellen Pfade auf der unteren Seite werden innerhalb der Eingangsvorrichtung 10, der Paketierungseinheit 20 und der Paketdaten-Verarbeitungsvorrichtung verarbeitet und sodann auf der oberen Seite mit der Ausgabeeinrichtung, ausgegeben. Hierbei können weitere Verfahrensschritte bzw. Funktionalitäten umgesetzt werden. So reicht die Eingangsschnittstelleneinrichtung 10 die Daten an die Paketierungseinheit 20 weiter. Diese werden sodann über die Ausgangsvorrichtung in Senderichtung 30 ausgegeben.

Figur 2 zeigt ein schematisches Blockdiagramm einer Empfangsvorrichtung in analoger, aber funktional inverser Weise zu Figur 2 zum effizienten Ausgeben von Daten. Vorliegend auf der unteren Seite ist die Ausgangsschnittstelleneinrichtung 10 angezeigt, welche unterschiedliche Ausgangsschnittstelleneinheiten aufweist, beispielsweise die Ausgangsschnittstelleneinheiten der ersten Gruppe, links, und der zweiten Gruppe, rechts. Unten sind 6 Ausgangspfeile stellvertretend für bis zu 128 Ausgangspfeile eingezeichnet, welche virtuelle Pfade beschreiben. Tatsächlich werden die Ausgänge auf der unteren Seite über einen physischen Kanal implementiert. Gleiches gilt für den Eingangspfeil auf der oberen Seite, der ebenfalls als ein physischer Kanal implementiert werden kann. Die höchstens 128 virtuellen Pfade auf der unteren Seite werden innerhalb der Ausgangsvorrichtung 10b, der Entpaketierungseinheit 20 und der Paketdaten-Verarbeitungsvorrichtung 31 verarbeitet nachdem sie von der oberen Seite von der Eingabeeinrichtung 32 empfangen wurden. Hierbei können weitere Verfahrensschritte bzw. Funktionalitäten umgesetzt werden. So empfängt die Ausgangsschnittstelleneinrichtung 10b die Daten von der Entpaketierungseinheit 20. Diese werden von der Eingangsvorrichtung in Empfangsrichtung 30 empfangen.

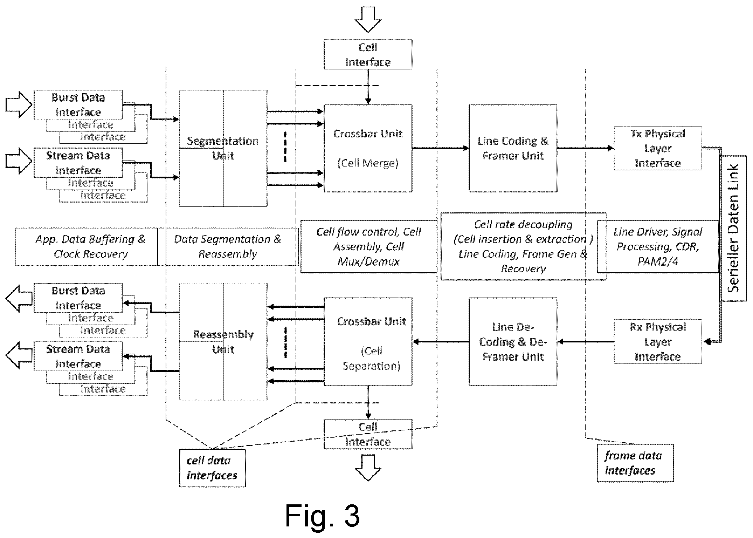

Figur 3 zeigt die Systemanordnung mit Sendevorrichtung oben, bestehend aus der Eingangsvorrichtung, auch als Eingangsschnittstelleneinrichtung 10a bezeichnet, in Senderichtung oben links, der Paketdaten-Verarbeitungsvorrichtung, auch als Paketierungseinrichtung 20 bezeichnet, in Senderichtung oben Mitte und der Ausgangsvorrichtung, auch als Ausgangseinrichtung 30 bezeichnet, in Senderichtung oben rechts. Wie aus der vorliegenden Figur 3 ersichtlich ist, können in den einzelnen Einrichtungen noch weitere Funktionalitäten bzw. strukturelle Merkmale verwirklicht werden. Ebenfalls aus der vorliegenden Figur 3 ist ersichtlich, dass die Daten strikt unidirektional weitergeleitet werden. Somit wird ein universales, modulares Massendatentransportsystem geschaffen.

Das Burst Data Interface auf der linken Seite kann einer Eingangsschnittstelleneinheit zum Empfangen von diskontinuierlichen Daten darstellen. Das Stream Data Interface kann eine Eingangsschnittstelle zum Empfangen von kontinuierlichen Daten darstellen. Die Segmentation Unit entspricht in einem Aspekt der vorliegenden Erfindung der Paketierungseinrichtung. Die Crossbar Unit entspricht in einem Aspekt der vorliegenden Erfindung der Paketdaten-Verarbeitungsvorrichtung.

Die weitere Einheit unten zeigt die Empfangsvorrichtung bestehend aus der Eingangsvorrichtung in Empfangsrichtung unten rechts, der Paketdaten-Verarbeitungsvorrichtung in Empfangsrichtung unten Mitte und der Ausgangsvorrichtung in Empfangsrichtung unten links.

Am rechten Rand verbindet ein serieller Datenlink die Sendevorrichtung mit der Empfangsvorrichtung, welcher als Kabel oder Glasfaserleitung implementiert werden kann.

Die oberen drei Blöcke sind Vorrichtungen der Sendevorrichtung und die unteren drei Blöcke sind Vorrichtungen der Empfangsvorrichtung. Den Einheiten und Einrichtungen der Sendevorrichtung folgen über den Pfeil auf der rechten Seite die Einheiten und Einrichtungen der Empfangsvorrichtung. Hier werden die Daten wiederum unidirektional weitergeleitet und auf der linken Seite über höchstens 128 virtuelle Datenkanäle ausgegeben.

In der Figur 3 ist mittels eines gefüllten schwarzen Pfeils eine direkte Kopplung zwischen der Eingangsschnittstelleneinrichtung und der Ausgangsschnittstelleneinrichtung gezeigt. Die Eingangsschnittstelleneinrichtung oben und die Ausgangsschnittstelleneinrichtung unten weisen zueinander eine direkte festverdrahtete kommunikative Kopplung auf. Hiermit wird der Kommunikationsweg abgekürzt und in einem Testmodus kann dieser Pfad verwendet werden. Die Komponenten rechts werden also aus dem Kommunikationspfad ausgekoppelt und das Signal wird mit oder alternativ ohne Verarbeitung in der Eingangsschnittstelleneinrichtung oder der Ausgangsschnittstelleneinrichtung mittels der Ausgangsschnittstelleneinrichtung effizient ausgegeben. Es kann sich um eine direkte festverdrahtete kommunikative Kopplung handelt. Dies lässt sich effizient umsetzen, insbesondere, wenn die Systemanordnung einstückig ausgeformt ist.

Die gezeigten strukturellen Merkmale können wie folgt beschrieben werden:
Die Erfindung bietet gemäß einem Aspekt der vorliegenden Erfindung generische Hardware (Burst/Stream) Lösungen, um Daten beliebiger Applikationsschnittstellen für die Übertragung mit immer gleichen Datenzellen bereitzustellen. Das Übertragungssystem implementiert auf Basis der Datenzellen virtuelle Datenpfade zwischen Applikationsschnittstellen über einen seriellen Link. Darüber hinaus bietet es die Möglichkeit auf die virtuellen Datenpfade zum Zwecke des "Repeatens" (Weiterleiten der Daten eines Datenpfads, ohne die Daten / Zellen zu verändern) direkt über eine Cell Interface zuzugreifen.

Die Erfindung umfasst:
a) Burst Data Interface Input
   a. Applikations-Daten Zwischenspeicher für burstartige Daten (PCI, SPI,I2C). Pufferung der Burst Daten, um eine lückenlose Paketierung der Datenzellen in der Segmentation Unit zu ermöglichen.
   b. Formatierung der Applikations-Daten auf die Zell-Daten -Bitbreiten Anpassung.
   c. Übergang vom Applikations- Takt- System zu dem Zell Takt System
   d. Bereitstellung eines generischen Mechanismus für die Markierung von Datenpaketen zum Zwecke der Synchronisation von Daten und Steuersignalen der Applikationsschnittstelle (z.B.: Burst Anfang/End)
b) Burst Data Interface Output
   a. Applikations-Daten Zwischenspeicher für burstartige Daten (PCI, SPI,I2C). Pufferung der Zell Daten, um einen lückenlose Daten Burst an der Applikationsschnittstelle zu ermöglichen.
   b. Formatierung der Zell-Daten auf die Applikations-Daten -Bitbreiten Anpassung.
   c. Übergang vom Zell Takt System zu dem Applikations- Takt- System mit der Möglichkeit den Applikationstakt zu erzeugen.
   d. Bereitstellung eines generischen Mechanismus für die Auswertung der Markierung der Datenpakete zum Zwecke der Synchronisation von Daten und Steuersignalen der Applikationsschnittstelle (z.B.: Burst Anfang/End)
c) Stream Data Interface Input
   a. Applikations-Daten Zwischenspeicher für kontinuierliche Daten (Video, Audio). Pufferung der Video- Daten, um eine lückenlose Paketierung der Datenzellen in der Segmentation Unit zu ermöglichen.
   b. Formatierung der Applikations- Daten auf die Zell-Daten -Bitbreiten Anpassung.
   c. Übergang vom Applikations Takt System zu dem Zell Takt System
   d. Bereitstellung eines generischen Mechanismus für die Markierung von Datenpaketen zum Zwecke der Synchronisation von Daten und Rahmensignalen der Applikationsschnittstelle (z.B.: Hsync, Vsync, DE)
d) Stream data Interface Output
   a. Applikations-Daten Zwischenspeicher für kontinuierliche Daten (Video, Audio). Pufferung der Zell Daten, um einen lückenlosen, kontinuierlichen Datenstrom an der Applikationsschnittstelle zu ermöglichen.
   b. Formatierung der Zell-Daten auf die Applikations-Daten -Bitbreiten Anpassung.
   c. Übergang vom Zell Takt System zu dem quellsynchronen Takt System der kontinuierlichen Daten mit der Möglichkeit den Applikationstakt zu erzeugen.
   d. Bereitstellung eines generischen Mechanismus für die Auswertung der Markierung der Datenpakete zum Zwecke der Synchronisation von Daten und Rahmensignalen der Applikationsschnittstelle (z.B.: Hsync, Vsync, DE)
e) Segmentation Unit/ Paketierungseinrichtung
   a. Erzeugung der Datenzellen mit den zellspezifischen Informationsdaten für Zell-Routing und Zelldaten Schutz. Steuerung der Zellpaketierung. (Formatierung der Applikations-Daten auf die Zell-Daten; Bitbreiten Anpassung)
f) Reassembly Unit/ Entpaketierungseinrichtung
   a. Rückgewinnung der Applikationsdaten aud aus den Datenzellen auf Basis der zellspezifischen Informationsdaten für Zell-Routing und Zelldaten Schutz. Steuerung der Zelldepaketierung (Formatierung der Zell-Daten auf die Applikations-Daten; Bitbreiten Anpassung)
g) Crossbar Unit for Cell Merge
   a. Empfang der Datenzellen von verschieden Ports (Burst Data Interfaces, Stream Data Interfaces, Cell Interface und Zuweisung einer Routing-Information an die Zell basierend auf der Herkunft (Port).
   b. Multiplexen aller empfangenen Zellen auf einen Ausgang (zur Line Coding und Framer Unit)
   c. Steuerung der Latenzzeit der Zellströme über einen konfigurierbaren Arbitrierungsmechansimus basierend auf Priorität.
h) Crossbar Unit for Cell Separation
   a. Ausgabe der Datenzellen an verschieden Ports (Burst Data Interfaces, Stream Data Interfaces, Cell Interface auf Basis der Routing-Information der Zellen.
   b. De-Multiplexen aller empfangenen Zellen (von der Line De-Coding und De-Framer Unit) auf viele Ausgänge.
i) Line Coding & Framer Unit
   a. Anpassung der Zell-Datenrate an die Link-Datenrate durch Einfügen von Leerzellen.
   b. Codierung der Daten für die serielle Datenübertragung
j) Line De-Coding & De-Framer Unit
   a. De-Codierung der seriellen Daten
   b. Entfernung von Leer-Zellen.
k) Tx Physical Layer Interface
   a. Wandlung der parallelen Daten in serielle Daten.
   b. Übersetzung der seriellen Daten-Bits in elektrische oder optische Signale.
l) Rx Physical Layer Interface
   a. Übersetzung der elektrischen oder optischen Signale in serielle Daten-Bits.
   b. Wandlung der seriellen Daten in parallele Daten.

Vorliegend nicht gezeigt ist ein Datenspeicher oder ein computerlesbares Medium mit einem Computerprogrammprodukt aufweisend Steuerbefehle, welche das vorgeschlagene Verfahren implementieren bzw. die vorgeschlagene Systemanordnung betreiben.

### Das Physical Layer Interface (Tx und Rx)

### Zweck und Funktion

Das Physical Layer Interface realisiert die elektrische Verbindung mit dem physikalischen Übertragungsmedium. Das primäre Übertragungsmedium ist eine differentielle 100-Ohm-Leitung. Optional kommen aber auch optische Übertragungsmedien in Betracht.

Das physikalische Übertragungsformat ist abhängig von der Datenrate und ist entweder NRZ bei niedrigen Datenraten oder PAM4 bei hohen Datenraten.

Der Funktionsblock Physical Layer Interface implementiert die Serialisierung der M-Bit-parallelen zeilenkodierten Daten (M = raw serializer bit width) auf der Sendeseite und die Wiederherstellung des seriellen Takts und der bitseriellen Daten sowie die Deserialisierung zu M- bitparallele zeilenkodierte Wörter auf der Empfangsseite. Die serielle Datenübertragung basiert auf dem Konzept der "Embedded Clock", d. h. es wird keine Zeit übertragen, sondern nur serielle Daten, die aufgrund der Leitungskodierung eine Zeitrückgewinnung ermöglichen.

Die Zelltakt Frequenz wird hauptsächlich durch die "Raw Bit Width" M des SERDES bestimmt. Bei 30 GBps und einer Rohbitbreite von M=128 ergibt sich beispielsweise eine Kerntaktfrequenz von 234,375 MHz.

### Schnittstelle zum physikalischen Medium

In Richtung des Übertragungsmediums implementiert der Funktionsblock Physical Layer Interface gemäß einem Aspekt der vorliegenden Erfindung zwei unidirektionale, differenzielle, bitserielle 100-Ohm-Schnittstellen. Eine Sende- und eine Empfangsschnittstelle. Das physikalische Medium besteht durchweg aus einer differentiellen Hin- und einer differentiellen Rückleitung. Diese Anordnung ermöglicht auch den optionalen Betrieb optischer Medien ohne große Anpassungsschaltungen.

Für das physikalische Medium liegt der Fokus auf Twisted-Pair-Kabeln, da die Einfügungsdämpfung von Koaxialkabeln bei höheren Frequenzen gleich der Einfügungsdämpfung von Twisted-Pair-Kabeln ist. Berücksichtigt man die 6dB Dämpfung der Single-Ended-Übertragung gegenüber der differentiellen Übertragung, bleibt für Koaxialkabel absolut kein Vorteil übrig.

Die maximale Kabellänge ist abhängig von der Datenrate (und dem Kabeldurchmesser).

In Senderichtung wird gemäß einem Aspekt der vorliegenden Erfindung ein Bit Takt System zur Serialisierung der Daten mit Hilfe einer PLL erzeugt. Mit diesem Bit Takt werden die Daten/Symbole gesendet. Der Bit Takt bildet die Grundlage für das Tx-Taktsystem. Der Tx-Datenpfad ist diesem Taktsystem entgegengerichtet. (Ziel synchron)

In Empfangsrichtung wird der zur Serialisierung der Daten verwendete Bit Takt mit Hilfe einer CDR aus dem empfangenen seriellen Datenstrom zurückgewonnen. Dieser Bit Takt bildet die Grundlage für das Rx-Taktsystem. Der Rx-Datenpfad ist in die gleiche Richtung wie dieses Zeitsystem gerichtet (Quelle synchron).

Die Kerntaktfrequenz kann hauptsächlich durch die "Raw Bit Width" M des SERDES bestimmt werden. Bei 30 GBps und einer Rohbitbreite von M=128 ergibt sich beispielsweise eine Kerntaktfrequenz von 234,375 MHz. Da SERDES-Technologien variieren können, wird auch M variieren. Folglich müssen das Zellformat und die Zelldatenschnittstellen zwischen den verschiedenen Funktionseinheiten bzw. Vorrichtungen flexible SERDES-Bitbreiten unterstützen, bzw. das Zellformat muss von der Zellzeilendatenbreite entkoppelt sein.

### Line Coding & Framer Vorrichtung und Line Decoding & Deframer Vorrichtung

### Zweck und Funktion

Die Ausgangsvorrichtung in Senderichtung bzw. die Eingangsvorrichtung in Empfangsrichtung generiert gemäß einem Aspekt der vorliegenden Erfindung aus den N-Bit breiten Übertragungsrahmen (siehe: 7. Übertragungsrahmen und Zellenformat) in Senderichtung die M-Bit breiten Symbole des Leitungscodes für die SERDES-Schnittstelle und generiert die N-Bit breiten Senderahmen wieder aus den M-Bit-Symbolen der SERDES-Schnittstelle in Empfangsrichtung.

Die Hauptfunktion der Ausgangsvorrichtung in Senderichtung bzw. die Eingangsvorrichtung in Empfangsrichtung ist das Zusammensetzen der Übertragungsrahmen aus den Zellen in Senderichtung und umgekehrt, in Empfangsrichtung, das Zerlegen der Übertragungsrahmen in Zellen.

Um die Datenrate des Zellstroms an die Datenrate der seriellen Übertragung anzupassen, können diese Vorrichtungen gemäß einem Aspekt der vorliegenden Erfindung Leerzellen in Senderichtung (von der Anwendungsschnittstelle zum Serializer) einfügen. Die Verfügbarkeit von Zellen hängt von den gesamten Bandbreitenanforderungen aller Anwendungsschnittstellen ab. Somit bilden die Zellen gemäß einem Aspekt der vorliegenden Erfindung keinen kontinuierlichen Zellenfluss, da die Zellen mit dem System Takt verarbeitet (gesammelt, zusammengesetzt und zusammengeführt) werden.

In Empfangsrichtung (vom Deserialisierer zu den Anwendungsschnittstellen) werden hier die leeren Zellen verworfen. Die Zellen werden aus dem seriellen Rahmen extrahiert. Da ähnlich wie in Senderichtung die Zelldatenrate kleiner als die Bandbreite bezogen auf den System Takt ist, werden diese Zellen mit einem Datengültigkeitssignal weitergeleitet.

Die Paketdaten-Verarbeitungsvorrichtung behandelt den Fluss der Zellen. Neben der Generierung der Zellheader und CRCs bzw. der Extraktion mit CRC-Prüfung der Daten aus den Zellen ist hier eine sogenannte Add-Drop-Multiplexer-Funktion implementiert.

Dies bedeutet, dass in Senderichtung die Zellen von den verschiedenen Dienstfunktionen gesammelt, mit einer VP-Kennung versehen, Zellkopf und -fuß erzeugt werden und von der Peer-to-Peer-Schnittstelle gesammelt werden und dann in einen gemeinsamen Zellstrom gemultiplext (Add-Funktion) werden.

In Empfangsrichtung wird der Zellenstrom gemäß einem Aspekt der vorliegenden Erfindung gemäß der VP-Kennung von der Eingangsvorrichtung in Empfangsrichtung an die verschiedenen Dienstfunktionen und die Peer-to-Peer-Schnittstelle verteilt. Die Daten für die Servicefunktionen werden entpackt und CRC-geprüft (Drop-Funktion). Alle Zellen, deren VP-Kennung nicht zu einer Dienstfunktion gehört, werden an die Peer-to-Peer-Schnittstelle weitergeleitet (Forward-Funktion).

### Eingangsvorrichtung in Senderichtung und Ausgangsvorrichtung in Empfangsrichtung

### Zweck und Funktion

Hier werden die auf Zellen basierenden virtuellen Datenpfade wieder in physikalische Datenpfade umgewandelt. Diese werden über generische Dienstschnittstellen für Stream- oder Burst-Daten mit den verschiedenen Anwendungsschnittstellen verbunden.

Applikationsschnittstellenarten sind beispielsweise Stream Data für beispielsweise Video- und Audiodaten und Burst Data für fast alle Arten von Paketen. Die Art und Weise wie Stream- und/oder Burst- Daten in die / von den Zellen gepackt bzw. entpackt werden, ist in der Zelle nicht kodiert. Stattdessen wird es zwischen zwei Endpunkten konfiguriert oder basierend auf einer virtuellen Verbindung vereinbart.

In Senderichtung implementiert die Eingangsvorrichtung zusammen mit der anwendungsspezifischen Schnittstelle gemäß einem Aspekt der vorliegenden Erfindung den Ausgangspunkt für die zellbasierten virtuellen Datenpfade.

In Empfangsrichtung implementiert die Ausgangsvorrichtung zusammen mit der anwendungsspezifischen Schnittstelle den Endpunkt für die zellbasierten virtuellen Datenpfade.

Eine Hauptaufgabe dieser Vorrichtungen (zusammen mit den anwendungsspezifischen Schnittstellen) besteht darin, die Formatumwandlung (bitbreite) von gestreamten oder Burst-Daten mit einer beliebigen Bitbreite in das N-Bit breite Zellenzeilendatenformat zu ermöglichen.

Die Schnittstellen zwischen den Stream Data- oder Burst Data-Funktionen zu diesen beiden Vorrichtungen haben die Bitbreite der Zellenzeilen (N). Die Stream-Data- oder Burst-Data-Schnittstellen kombinieren die Taktdomänenüberquerung und die Bitbreiten Umwandlung der Daten von der Anwendungsschnittstelle zu den N Bits der Zellenzeilen. Dabei ist die Zellzeilennutzlast bereits so formatiert, dass Zellfuß und -kopf in die erste und letzte Zellzeile passen.

Die Zellen bieten gemäß einem Aspekt der vorliegenden Erfindung die Möglichkeit, Nutzlastinformationsdaten zusätzlich zu Nutzlastdaten zu übertragen. Die Nutzinformationsdaten werden beispielsweise zur Generierung von Rahmensignalen für Video oder Audio im Falle von Stream-Daten und zur Generierung von Paketen, Transaktionen oder Bursts im Falle von Burst-Daten verwendet.

### Binden von Rahmensignalen an die Streaming-Daten

Die Grundidee der Anbindung von Rahmensignalen an den Datenstrom besteht darin, einen signifikanten Ankerpunkt (oder mehrere Ankerpunkte) im zeitlichen Ablauf der Rahmensignale zu definieren und diesen (oder diese) mittels der Payload-Info-Bits so zu übertragen, so dass eine eindeutige Synchronisation von Datenstrom und Rahmensignalen möglich ist. Idealerweise geschieht dies, indem ein Fixpunkt des Datenstroms an einem Fixpunkt in der markierten Datenzelle platziert wird. Zur Wiederherstellung des zeitlichen Ablaufs der Rahmensignale wird ein freilaufender Timing-Generator verwendet, der das gesamte Timing selbstständig erzeugen kann. Die Anpassung des Timings an den Datenstrom erfolgt nun durch Auswertung der Payload-Info-Bits und die Anpassung des Timings an die definierte Stelle in der Datenzelle.

### Stream data (kontinuierlicher Datenstrom)

Die Stream Data-Schnittstelle kombiniert die Überschreitung von der Applikationstakt Domäne in die Zelltakt Domäne und die Umwandlung der Bitbreite von Daten von der Anwendungsschnittstelle zu den N Bits der Zellenzeilen. Dabei ist die Zellzeilennutzlast bereits so vorformatiert, dass Zell Footer und Header in die erste und letzte Zellzeile passen.

Streaming-Daten sind (normalerweise) quellensynchron. Hier wird die Taktdomänenüberquerung (clock domain crossing) des Datenpfads von der Applikationstakt Domäne zur Zelltakt Domäne durchgeführt.

In Senderichtung ist ein Datenpuffer vorgesehen, in den die quellensynchronen Daten mit dem Applikationstakt geschrieben werden. Die Eingangsvorrichtung in Senderichtung ruft die Daten aus diesem Puffer nach Bedarf ab, um die Datenformatumwandlung in die N Bit breiten Reihen der Zellen durchzuführen. Rahmensignale (z. B.: Hsync, Vsync, DE) werden in Payload Info Bits kodiert, sodass auf der Empfängerseite eine Rekonstruktion der Rahmensignale möglich ist.

In der Empfangsrichtung werden die Zellendaten von der Ausgangsvorrichtung in Empfangsrichtung in einen Datenpuffer geschrieben. Basierend auf den Payload Info Bits werden die Rahmensignale rekonstruiert. Der Applikationstakt der Sendeseite wird zum Beispiel unter Verwendung von Pufferfüllstand und Taktsynthese regeneriert.

Ist eine Verschlüsselung der Daten erforderlich (HDCP), werden in dieser Funktion die Zelldaten verschlüsselt bzw. entschlüsselt.

Aufgrund der unterschiedlichen Arten von Stream-Daten, wie z. B.: Audio, Video mit und ohne Verschlüsselung, kann es unterschiedliche Implementierungen dieser Grundfunktion geben (z. B.: VStream In/Out; AStream In/Out; EncVStream In/Out).

### Burst data (diskontinuierlicher Datenstrom)

Die Burst-Daten-Schnittstelle kombiniert die Überschreitung von der Applikationstakt Domäne in die Zelltakt Domäne und die Umwandlung der Bitbreite von Burst-Daten von der Anwendungsschnittstelle zu den N Bits der Zellenzeilen. Dabei ist die Zellzeilennutzlast bereits so vorformatiert, dass Zell Footer und Header in die erste und letzte Zellzeile passen.

Burst-Daten sind (normalerweise) synchron zu einem externen Takt und haben unterschiedliche Kennzeichnungssignale für Richtung und Datentyp (Adresse / Daten / ByteEnable).

Diese Daten werden normalerweise von Steuerleitungen begleitet, um ein bestimmtes Protokoll zu realisieren.

In Senderichtung ist ein Datenpuffer vorgesehen, in den die Burstdaten mit dem Schnittstellentakt geschrieben werden. Die Eingangsvorrichtung in Senderichtung ruft die Daten aus diesem Puffer nach Bedarf ab, um die Datenformatumwandlung in die N Bit breiten Reihen Zellen durchzuführen.

In der Empfangsrichtung werden die Zellendaten von der Ausgangsvorrichtung in Empfangsrichtung in einen Datenpuffer geschrieben. Basierend auf den Payload Info Bits werden die Schnittstellensteuersignale rekonstruiert.

Die Payload-Info-Bits werden verwendet, um die Steuersignale der anwendungsspezifischen Schnittstellen zu erzeugen oder die Protokollzustandsmaschinen in den anwendungsspezifischen Schnittstellen zu synchronisieren.

Aufgrund der unterschiedlichen Schnittstellen, die Burst-ähnliche Daten bereitstellen (SPI, I2C, MII), kann es unterschiedliche Implementierungen dieser Grundfunktion geben (z. B.: SPIBurst, I2CBurst, MIIBurst).

Dementsprechend wird es auch (leicht) unterschiedliche Stream In/Out-Schnittstellen geben, deren Struktur jedoch gleich sein sollte.

### Das Zellformat

Die Zelle besteht gemäß einem Aspekt der vorliegenden Erfindung aus einem Header mit fester Bitlänge, einem Payload-Bereich mit 4 wählbaren Bitlängen und einem Footer wiederum mit fester Bitlänge.

Die Zellstruktur ist eine Folge von Bits wie folgt:
- Eine virtuelle 7-Bit-Pfadkennung (VP), die eine eindeutige Adresse des virtuellen Pfads darstellt.
- Eine 3-Bit-Sequenznummer (SN), die die Zellen fortlaufend in ihrer Reihenfolge nummeriert.
- Eine 2 Bit breite Cell Type (CT)-Kennung, die die Länge der Nutzdaten angibt.
- Eine 3 Bit breite Payload Information (PI), die zusätzliche Informationen über die Nutzlast enthält. Dies kann auch zur Synchronisation von Nutzdaten und Rahmendaten oder Steuerdaten verwendet werden.
- Ein 10 Bit breites CRC-Polynom (HCRC) zum Fehlerschutz der Header-Informationen. Das Polynom hat bis zu einer Bitfolge von 21 Bit (P=0x2B9) eine Hamming-Distanz von 5.
- Der Payload (PL)-Bereich hat eine Länge von: 187, 411, 635 oder 859 Bit, abhängig vom CT-Wert. Die kürzeste Nutzlast wird so gewählt, dass sie immer noch größer ist als die größte unterstützte (Video-)Streaming-Busbreite. (Sollte die Abbildung von Stromdaten auf die Zellennutzlast vereinfachen).
- Abschließend ein 12 Bit breites CRC-Polynom (PCRC) zum Fehlerschutz der Nutzdaten. Das Polynom hat bis zu einer Bitfolge von 2035 Bit (P=0x8F3) eine Hamming-Distanz von 4.

### Format der Übertragungsrahmen

Der Übertragungsrahmen besteht gemäß einem Aspekt der vorliegenden Erfindung aus einer Folge von M-Bit breiten Wörtern. Der Rahmen beginnt mit einem M-Bit breiten "Komma"-Wort aus einer definierten Folge von Kommawörtern für die Rahmenausrichtung. Dann folgen K Zellen. Die Zellen bestehen aus 2, 4, 6 oder 8 N-Bit breiten Wörtern, die Header, Payload und Footer tragen. Diese N-Bit breiten Wörter werden zu M-Bit breiten Symbolen codiert (Zeilenkodierung).

## Patentansprüche

1. Sendevorrichtung zum effizienten Weiterleiten von Daten in einem Automobil, aufweisend:
- eine Eingangsschnittstelleneinrichtung (10) aufweisend eine Vielzahl von Eingangsschnittstelleneinheiten, mit einer ersten Gruppe von Eingangsschnittstelleneinheiten, welche jeweils hardwaretechnisch zum Empfangen von kontinuierlichen Daten eingerichtet sind und einer zweiten Gruppe von Eingangsschnittstelleneinheiten, welche jeweils hardwaretechnisch zum Empfangen von diskontinuierlichen Daten eingerichtet sind;
- eine Paketierungseinrichtung (20) eingerichtet zum Anreichern der empfangenen Daten mit einer Weiterleitungsinformation und einer Datenabsicherungsinformation; und
- eine Ausgangseinrichtung in Senderichtung (30) eingerichtet zum Bereitstellen der Daten an einen physischen Übertragungskanal, wobei die Eingangsschnittstelleneinrichtung (10), die Paketierungseinrichtung (20) und die Ausgangseinrichtung (30) unidirektional kommunikativ gekoppelt sind.

2. Sendevorrichtung nach Anspruch 1, **dadurch gekennzeichnet, dass** eine Anzahl der Schnittstelleneinheiten zwischen 2 und 128 beträgt und/ oder bis zu 128 virtuelle Datenpfade zu den Eingangsschnittstelleneinheiten vorliegen.

3. Sendevorrichtung nach Anspruch 1 oder 2, **dadurch gekennzeichnet, dass** die Eingangsschnittstelleneinrichtung (10), die Paketierungseinrichtung (20) und die Ausgangseinrichtung (30) hardwaretechnisch umgesetzt sind.

4. Sendevorrichtung nach einem der vorhergehenden Ansprüche, **dadurch gekennzeichnet, dass** alle Einheiten und Einrichtungen eingerichtet sind lediglich in eine Richtung Daten zu übermitteln.

5. Sendevorrichtung nach einem der vorhergehenden Ansprüche, **dadurch gekennzeichnet, dass** kontinuierliche Daten als Streaming- Daten vorliegen und diskontinuierliche Daten als Burst-Daten vorliegen.

6. Sendevorrichtung nach einem der vorhergehenden Ansprüche, **dadurch gekennzeichnet, dass** die Schnittstelleneinheiten für kontinuierliche Daten einen größeren Pufferspeicher aufweisen als Schnittstelleneinheiten für diskontinuierliche Daten.

7. Sendevorrichtung nach einem der vorhergehenden Ansprüche, **dadurch gekennzeichnet, dass** die Paketierungseinrichtung (20) die Daten in ihrem Datenformat anpasst.

8. Sendevorrichtung nach einem der vorhergehenden Ansprüche, **dadurch gekennzeichnet, dass** die Eingangsschnittstelleneinrichtung (10), die Paketierungseinrichtung (20) und die Ausgangseinrichtung (30) flüchtige Speicher aufweisen.

9. Sendevorrichtung nach einem der vorhergehenden Ansprüche, **dadurch gekennzeichnet, dass** die Anzahl der Schnittstelleneinheiten der ersten Gruppe und der zweiten Gruppe gleich ist.

10. Empfangsvorrichtung zum effizienten Weiterleiten von Daten in einem Automobil, aufweisend:
- eine Ausgangsschnittstelleneinrichtung (10) aufweisend eine Vielzahl von Ausgangsschnittstelleneinheiten, mit einer ersten Gruppe von Ausgangsschnittstelleneinheiten, welche jeweils hardwaretechnisch zum Senden von kontinuierlichen Daten eingerichtet sind und einer zweiten Gruppe von Ausgangsschnittstelleneinheiten, welche jeweils hardwaretechnisch zum Senden von diskontinuierlichen Daten eingerichtet sind;
- einer Entpaketierungseinrichtung (20) eingerichtet zum Separieren der zu sendenden Daten von einer Weiterleitungsinformation und einer Datenabsicherungsinformation; und
- einer Eingangseinrichtung in Empfangsrichtung (30) eingerichtet zum Empfangen der Daten auf einem physischen Übertragungskanal, wobei die Ausgangsschnittstelleneinrichtung (10), die Entpaketierungseinrichtung (20) und die Eingangseinrichtung (30) unidirektional kommunikativ gekoppelt sind.

11. Systemanordnung aufweisend die Sendevorrichtung gemäß einem der Ansprüche 1 bis 9 und die Empfangsvorrichtung gemäß Anspruch 10, welche mittels einer seriellen Datenverbindung kommunikativ gekoppelt sind.

12. Systemanordnung gemäß Anspruch 11, **dadurch gekennzeichnet, dass** zwischen allen Vorrichtungen, Einrichtungen und Einheiten ein statisches Routing und/ oder eine Festverdrahtung vorgesehen ist.

13. Systemanordnung gemäß Anspruch 11 oder 12, **dadurch gekennzeichnet, dass** diese einstückig ausgeformt ist.

14. Verfahren zum Bereitstellen einer Eingangsvorrichtung zum effizienten Weiterleiten von Daten auf virtuellen Datenpfaden, aufweisend:
- ein Bereitstellen (100) einer Eingangsschnittstelleneinrichtung aufweisend eine Vielzahl von Eingangsschnittstelleneinheiten, mit einer ersten Gruppe von Eingangsschnittstelleneinheiten, welche jeweils hardwaretechnisch zum Empfangen von kontinuierlichen Daten eingerichtet sind und einer zweiten Gruppe von Eingangsschnittstelleneinheiten, welche jeweils hardwaretechnisch zum Empfangen von diskontinuierlichen Daten eingerichtet sind;
- ein Bereitstellen (101) einer Paketierungseinrichtung eingerichtet zum Anreichern der empfangenen Daten mit einer Weiterleitungsinformation und einer Datenabsicherungsinformation; und
- ein Bereitstellen (102) einer Ausgangseinrichtung eingerichtet zum Bereitstellen der Daten an einen physischen Übertragungskanal, wobei die Eingangsschnittstelleneinrichtung, die Paketierungseinrichtung und die Ausgangseinrichtung unidirektional kommunikativ gekoppelt sind.

15. Verfahren zum Bereitstellen einer Systemanordnung gemäß einem der Ansprüche 11 bis 13 aufweisend ein Bereitstellen der Sendevorrichtung nach einem der Ansprüche 1 bis 9 und einer Empfangsvorrichtung nach Anspruch 10, welche kommunikativ gekoppelt werden.

## Claims

1. A transmitting device for the efficient forwarding of data in an automobile, comprising
- an input interface device (10) having a plurality of input interface units, with a first group of input interface units which are each set up in terms of hardware to receive continuous data and a second group of input interface units which are each set up in terms of hardware to receive discontinuous data;
- a packetisation device (20) set up for enriching the received data with forwarding information and data protection information; and
- an output device in the transmitting direction (30) arranged to provide the data to a physical transmission channel, wherein the input interface device (10), the packetising device (20) and the output device (30) are unidirectionally communicatively coupled.

2. The transmitting device according to claim 1, **characterised in that** a number of the interface units is between 2 and 128 and/or up to 128 virtual data paths to the input interface units are present.

3. The transmitting device according to claim 1 or 2, **characterised in that** the input interface device (10), the packetisation device (20) and the output device (30) are implemented in hardware.

4. The transmitting device according to one of the preceding claims, **characterised in that** all units and devices are set up to transmit data in one direction only.

5. The transmitting device according to one of the preceding claims, **characterised in that** continuous data are present as streaming data and discontinuous data are present as burst data.

6. The transmitting device according to one of the preceding claims, **characterised in that** the interface units for continuous data have a larger buffer memory than interface units for discontinuous data.

7. The transmitting device according to one of the preceding claims, **characterised in that** the packetising device (20) adapts the data in its data format.

8. The transmitting device according to one of the preceding claims, **characterised in that** the input interface device (10), the packetising device (20) and the output device (30) have volatile memories.

9. The transmitting device according to one of the preceding claims, **characterised in that** the number of interface units of the first group and the second group is the same.

10. A receiving device for efficiently forwarding data in an automobile, comprising
- an output interface device (10) comprising a plurality of output interface units, having a first group of output interface units which are each set up in terms of hardware for transmitting continuous data and a second group of output interface units which are each set up in terms of hardware for transmitting discontinuous data;
- a depacketising device (20) set up for separating the data to be transmitted from forwarding information and data protection information; and
- an input device in the receiving direction (30) arranged to receive the data on a physical transmission channel, wherein the output interface device (10), the unpacking device (20) and the input device (30) are unidirectionally communicatively coupled.

11. A system arrangement comprising the transmitting device according to one of claims 1 to 9 and the receiving device according to claim 10, which are communicatively coupled by means of a serial data link.

12. The system arrangement according to claim 11, **characterised in that** static routing and/or hardwiring is provided between all devices, equipment and units.

13. The system arrangement according to claim 11 or 12, **characterised in that** it is formed in one piece.

14. A method of providing an input device for efficiently routing data on virtual data paths, comprising
- providing (100) an input interface device having a plurality of input interface units, having a first group of input interface units which are each set up in terms of hardware to receive continuous data and a second group of input interface units which are each set up in terms of hardware to receive discontinuous data;
- providing (101) a packetisation device set up for enriching the received data with forwarding information and data protection information; and
- providing (102) output means arranged to provide the data to a physical transmission channel, wherein the input interface means, the packetising means and the output means are unidirectionally communicatively coupled.

15. A method of providing a system arrangement according to any one of claims 11 to 13, comprising providing the transmitting device according to any one of claims 1 to 9 and a receiving device according to claim 10, which are communicatively coupled.

## Revendications

1. Dispositif d'émission pour la transmission efficace de données dans une automobile, comprenant :
- un dispositif d'interface d'entrée (10) présentant une pluralité d'unités d'interface d'entrée, avec un premier groupe d'unités d'interface d'entrée qui sont respectivement aménagées du point de vue de la technique matérielle pour recevoir des données continues et un deuxième groupe d'unités d'interface d'entrée qui sont respectivement aménagées du point de vue de la technique matérielle pour recevoir des données discontinues ;
- un dispositif de mise en paquets (20) conçu pour enrichir les données reçues avec une information de retransmission et une information de protection des données ; et
- un dispositif de sortie dans la direction d'émission (30) aménagé pour fournir les données à un canal de transmission physique, le dispositif d'interface d'entrée (10), le dispositif de mise en paquets (20) et le dispositif de sortie (30) étant couplés de manière communicative unidirectionnelle.

2. Dispositif de transmission selon la revendication 1, **caractérisé en ce que** le nombre d'unités d'interface est compris entre 2 et 128 et/ou **en ce qu'**il existe jusqu'à 128 chemins de données virtuels vers les unités d'interface d'entrée.

3. Dispositif d'émission selon la revendication 1 ou 2, **caractérisé en ce que** le dispositif d'interface d'entrée (10), le dispositif de mise en paquets (20) et le dispositif de sortie (30) sont mis en œuvre au niveau du matériel.

4. Dispositif d'émission selon l'une des revendications précédentes, **caractérisé en ce que** toutes les unités et tous les dispositifs sont agencés pour transmettre des données uniquement dans une direction.

5. Dispositif d'émission selon l'une des revendications précédentes, **caractérisé en ce que** les données continues sont présentes sous forme de données en continu et les données discontinues sont présentes sous forme de données en rafale.

6. Dispositif d'émission selon l'une des revendications précédentes, **caractérisé en ce que** les unités d'interface pour les données continues présentent une mémoire tampon plus importante que les unités d'interface pour les données discontinues.

7. Dispositif d'émission selon l'une des revendications précédentes, **caractérisé en ce que** le dispositif de mise en paquets (20) adapte les données dans leur format de données.

8. Dispositif d'émission selon l'une quelconque des revendications précédentes, **caractérisé en ce que** le dispositif d'interface d'entrée (10), le dispositif de mise en paquets (20) et le dispositif de sortie (30) comportent des mémoires volatiles.

9. Dispositif d'émission selon l'une des revendications précédentes, **caractérisé en ce que** le nombre d'unités d'interface du premier groupe et du deuxième groupe est égal.

10. Dispositif de réception pour la transmission efficace de données dans une automobile, comprenant :
- un dispositif d'interface de sortie (10) comprenant une pluralité d'unités d'interface de sortie, avec un premier groupe d'unités d'interface de sortie, chacune étant configurée matériellement pour transmettre des données continues et un deuxième groupe d'unités d'interface de sortie, chacune étant configurée matériellement pour transmettre des données discontinues ;
- un dispositif de dépaquetage (20) conçu pour séparer les données à envoyer d'une information de retransmission et d'une information de protection des données ; et
- un dispositif d'entrée dans le sens de réception (30) agencé pour recevoir les données sur un canal de transmission physique, le dispositif d'interface de sortie (10), le dispositif de dépaquetage (20) et le dispositif d'entrée (30) étant couplés de manière communicative unidirectionnelle.

11. Agencement de système comprenant le dispositif émetteur selon l'une quelconque des revendications 1 à 9 et le dispositif récepteur selon la revendication 10, couplés de manière communicative au moyen d'une liaison de données série.

12. Agencement de système selon la revendication 11, **caractérisé en ce qu'**un routage statique et/ou un câblage fixe est prévu entre tous les dispositifs, équipements et unités.

13. Dispositif de système selon la revendication 11 ou 12, **caractérisé en ce qu'**il est formé d'une seule pièce.

14. Procédé de fourniture d'un dispositif d'entrée pour acheminer efficacement des données sur des chemins de données virtuels, comprenant :
- la fourniture (100) d'un dispositif d'interface d'entrée comprenant une pluralité d'unités d'interface d'entrée, avec un premier groupe d'unités d'interface d'entrée qui sont chacune configurées matériellement pour recevoir des données continues et un deuxième groupe d'unités d'interface d'entrée qui sont chacune configurées matériellement pour recevoir des données discontinues ;
- une mise à disposition (101) d'un dispositif de mise en paquets conçu pour enrichir les données reçues avec une information de retransmission et une information de protection des données ; et
- une fourniture (102) d'un dispositif de sortie agencé pour fournir les données à un canal de transmission physique, le dispositif d'interface d'entrée, le dispositif de mise en paquets et le dispositif de sortie étant couplés de manière communicative unidirectionnelle.

15. Procédé pour fournir un agencement de système selon l'une quelconque des revendications 11 à 13, comprenant la fourniture du dispositif émetteur selon l'une quelconque des revendications 1 à 9 et d'un dispositif récepteur selon la revendication 10, qui sont couplés de manière communicative.
